# EUROPÄISCHE PATENTSCHRIFT

(11) **EP 0 576 485 B1**
(45) Veröffentlichungstag und Bekanntmachung des Hinweises auf die Patenterteilung: **05.06.1996**
(21) Anmeldenummer: 92906519.1
(22) Anmeldetag: 13.03.1992
(51) Int. Cl.: C08G 18/76, C08G 18/12, C08G 18/08, C08G 18/32, C08G 18/66, C09J 175/06, C09D 175/06

(54) **FÜR REAKTIVSYSTEME GEEIGNETE POLYMERDISPERSIONEN, VERFAHREN ZU IHRER HERSTELLUNG UND IHRE VERWENDUNG**
POLYMER DISPERSIONS SUITABLE FOR REACTIVE SYSTEMS, PROCESS FOR THEIR PREPARATION AND USE
DISPERSIONS DE POLYMERES APPROPRIES A DES SYSTEMES REACTIFS, PROCEDE POUR LEUR PREPARATION ET UTILISATION

(30) Priorität: 22.03.1991 DE 4109477
(43) Veröffentlichungstag der Anmeldung: 05.01.1994
(73) Patentinhaber: Henkel Kommanditgesellschaft auf Aktien, 40191 Düsseldorf (DE)
(72) Erfinder: BAURIEDEL, Hans, D-4000 Düsseldorf (DE); KLAUCK, Wolfgang, D-4005 Meerbusch 2 (DE); HENKE, Günter, D-4040 Neuss (DE)
(86) Internationale Anmeldenummer: EP9200560
(87) Internationale Veröffentlichungsnummer: WO9216576

(56) Entgegenhaltungen:
- EP-A- 0 242 731
- EP-A- 0 355 682
- EP-A- 0 369 389
- WO-A-90/06330
- US-A- 4 791 168

## Beschreibung

Die Erfindung betrifft eine als reaktive Harzkomponente für ein 2-Komponenten-Reaktivsystem geeignete wäßrige Polymerdispersion, ein Verfahren zur Herstellung derartiger Systeme sowie deren Verwendung.

Polyurethandispersionen und Verfahren zu deren Herstellung mit und ohne Lösungsmittel als Dispergierhilfe sind dem Fachmann bekannt und vielfach beschrieben. Exemplarisch genannt seien die DE-0S 39 03 796, EP 0 272 566, EP 0 312 890, GB 2 104 085 und EP 0 354 471. Auch die Verwendung von wäßrigen Polyurethandispersionen zur Herstellung von Laminaten ist in der Patentliteratur beschrieben. So wird in der JP 60212455 ein Polyurethansystem beschrieben, das hergestellt wird aus einem Polyetherpolyol als Polyolkomponente, N-Methyl-diethanolamin als gegenüber Isocyanaten reaktive Verbindung mit einer zur Salzbildung befähigten Gruppe und Xylylendiisocyanat (XDI) als Isocyanatkomponente. Zur Härtung des Systems wird hier eine polyfunktionale Epoxidverbindung namentlich Sorbitolpolyglycidylether verwendet. Die EP 0 126 297 beschreibt ein System, bei dem die Polyurethankomponente z.B. aus OH-funktionellem Neopenthylglykol-/Hexandioladipat, Dimethylpropionsäure (DMPA) und Toluylendiisocyanat (TDI) hergestellt und anschließend mit Aminoethylethanolamin kettenverlängert werden kann. Diese Prepolymeren enthalten zwingenderweise bestimmte reaktive Amino- oder Semicarbizidgruppen. Zur Härtung dieses Systems bei der Laminatherstellung wurde beispielsweise Bisphenol-A-Diglycidylether eingesetzt. Es findet sich auch kein Hinweis darauf, daß diese Systeme gewünschtenfalls lösungsmittelfrei hergestellt werden können.

Aus dem Stand der Technik zu Polyurethandispersionen sind eine Vielzahl von Ausgangssubstanzen bekannt, beispielsweise OH-funktionelle Adipate als Polyesterpolyole und DMPA als innerer Emulgator aus der EP 0 126 297, Tetramethylxylylendiisocyanat (TMXDI) und andere Isocyanate aus der nicht vorveröffentlichten deutschen Anmeldung mit dem Aktenzeichen P 40 11 455 sowie die Umsetzung mit Aminoalkoholen als auch die Kettenverlängerung mit Wasser aus der EP 0 354 471. Auch die verschiedenen Varianten des Dispergierens als auch in Wasser dispergierbare Polyisocyanate und Epoxide gehören zum Stand der Technik. Trotz dieses Detailwissens um Ausgangstoffe und Verfahren, ist es bislang nicht gelungen, spezielle Polyurethandispersionen, die zur Verwendung als Harzkomponente für 2-Komponenten-Reaktivsysteme z.B. als Folienkaschierklebstoffe geeignet sind herzustellen, die die besonderen an derartige Reaktivsysteme zu stellenden Anforderungen erfüllen.

Als eine dieser Anforderungen wäre hier die haftklebrige Momentanhaftung des aus der Dispersion nach der Trocknung gebildeten Films zu nennen. Diese vorübergehende, durch Weiterreaktion mit der zweiten Reaktivkomponente (B) wieder verschwindende Anfangsklebrigkeit ermöglicht eine vollflächige Substratbenetzung. Dies gilt insbesondere bei Kaschiertemperaturen kleiner 60°C.

Das Erzielen hoher Verbundhaftwerte ist eine Anforderung für eine Anwendung als Kaschierklebstoff. Diese hohen Verbundhaftwerte sollen sowohl in der Verbundfläche als auch in der Siegelzone nach dem Verschweißen der jeweiligen am Verbund beteiligten thermoplastischen Innenlagen entstehen. Größenordnungsmäßig wird im ersten Fall eine Schälhaftung je nach Verbundaufbau von 4 Newton und mehr pro 15 mm Streifenbreite bei 100 mm/min Abzugsgeschwindigkeit und im letzteren Fall z.B. bei Polyolefinfolien 30 Newton und mehr bei 15 mm Streifenbreite und ebenfalls 100 mm/min Abzugsgeschwindigkeit angestrebt.

Zu den weiteren Anforderungen zählt eine perfekte Verbundoptik, welche die Transparenz bei Kunststoffverbundfolien als auch die Strukturfeinheit bei Aluminiumverbundfolien einschließt. Vor allen Dingen bei Verbundfolien für den Nahrungsmittelverpackungsbereich ist Monomerarmut, vorzugsweise Monomerfreiheit, des nach Wasserentzug aus der Dispersion gebildeten Rückstands notwendig. Derartige Monomere unterliegen möglicherweise einer Migration, die unerwünscht ist. Des weiteren ist u.a. aus arbeitssicherheitstechnischen Gründen bei der Verarbeitung eine zumindest weitgehende Lösungsmittelfreiheit der Reaktivsysteme gefordert. Zusätzlich wird eine hohe Wasserfestigkeit der hergestellten Verbunde angestrebt. Darüber hinaus sollen die erfindungsgemäßen Dispersionen universell einsetzbar sein, d.h. die entsprechenden Reaktivsysteme sollen sich nicht nur zum Kleben sondern auch zum Beschichten eignen. Zusätzlich soll die Polymerdispersion so zu gestalten sein, daß für entsprechende Reaktivsysteme mehr als ein Reaktionsmechanismus zur Aushärtung zur Auswahl steht.

Aufgabe der Erfindung ist es, wäßrige Reaktivklebstoffe zur Folienkaschierung zur Verfügung zu stellen, die als reaktive Harzkomponente für 2-Komponenten-Reaktivsysteme geeignet sind und die die vorstehend genannten Anforderungen erfüllen.

Die Aufgabe wurde gelöst durch eine als reaktive Harzkomponente (A) für ein 2-Komponenten-Reaktivsystem geeignete wäßrige Polymerdispersion, dadurch gekennzeichnet, daß zumindestens 20 Gew.-% des Polymergehaltes aus einer wäßrigen Dispersion OH-funktioneller Polyurethanprepolymerer stammt, die herstellbar ist durch Umsetzung
- einer Polyesterpolyole enthaltenden Polyolkomponente (I) und
- gegenüber Isocyanaten mindestens zweifach reaktive Verbindungen mit zur Salzbildung befähigten Gruppen (II) mit
- einer zumindest aus 20 Gew.-% Tetramethylxylylendiisocyanat (TMXDI) bestehenden Isocyanatkomponente (III) im stöchiometrischen Überschuß,
- anschließendes Dispergieren in Wasser und
- zumindest anteilsweise Umsetzung der verbliebenen NCO-Gruppen mit Amino-alkoholen (IV) sowie
- gewünschtenfalls anschließender Kettenverlängerung.

Die Harzkomponente (A) kann bis zu 80 % bezogen auf den Festkörperanteil Polymere enthalten, die nicht den nachfolgend beschriebenen OH-funktionellen Polyurethanprepolymeren entsprechen. Besonders geeignet sind hier Polymere auf Basis von Acrylverbindungen, also Acrylate und Methacrylate. Neben den Homopolymeren sind auch Copolymere und Terpolymere geeignet. Auch Polymere anderer Acrylverbindungen wie z.B. Acrylnitril können geeignet sein. Als weitere geeignete Polymere seien insbesondere Vinylacetat, SBR-latices sowie Vinylalkohol genannt. Wenn auch mit einem Polymergehalt von 20 Gew.-% an Polyurethanprepolymeren in der Dispersion gute Ergebnisse erzielt werden können, so ist doch bevorzugt, daß der Gehalt dieser Prepolymeren 50 oder gar 70 Gew.-% übersteigt. In einer besonderen Ausführungsform sind außer den Polyurethanprepolymeren keine anderen Polymeren in der Dispersion vorhanden.

Die in der Polyolkomponente (I) enthaltenen Polyesterpolyole beruhen vorzugsweise zumindest überwiegend auf Adipinsäure und/oder Phthalsäure als Ausgangssubstanz. Auch Mischester der beiden genannten Säuren sind gut geeignet. Besonders geeignet sind reine Polyadipate oder Polyphthalate sowie deren Mischungen. Besonders gute Ergebnisse werden erzielt, wenn darüber hinaus die genannten Polyesterpolyole auf ethersauerstoffhaltigen Glykolhomologen als Alkoholkomponente basieren.

Die genannten Polyesterpolyole sind vorzugsweise in einer Menge von mindestens 50 Gew.-%, bevorzugt mindestens 75 Gew.-%, in (I) enthalten. Besonders vorteilhaft ist deren Verwendung ohne nennenswerte weitere Zumischungen. Geeignete Polyesterpolyole sind auch in der DE 37 35 587 beschrieben. Insbesondere sind hier die Homologen gemeint, die sich formal durch Anlagerung von Alkylenoxiden erhalten lassen. Besonders erwähnt seien Adukte des Ethylenoxids, aber auch solche des Propylenoxids und/oder Butylenoxids. Besonders geeignet ist Diethylenglykol.

Die den erfindungsgemäß eingesetzten Polyurethandispersionen zugrundeliegenden Polyesterpolyole können also bis zu 50 Gew.-%, vorzugsweise jedoch weniger, durch andere in derartigen Zubereitungen übliche Polyole ersetzt sein. Ganz allgemein gilt auch hier - genau wie für die Polyesterpolyole - daß diese anderen Polyole über zumindest zwei gegenüber Isocyanaten reaktionsfähige Wasserstoffatome verfügen müssen und im wesentlichen linear sein sollten. Geeignet sind hier beispielsweise Polyether, Polyacetale, Polycarbonate, Polythioether, Polyamide, Polyesteramide und/oder andere Polyester, die jeweils im Mittel zwei bis höchstens vier reaktive Wasserstoffatome aufweisen. In besonderen Fällen kann es bevorzugt sein, zu den überwiegend difunktionellen Polyolen einen Teil höherfunktioneller Polyole insbesondere trifunktioneller Polyole zuzusetzen. Abhängig von deren Menge läßt sich der Grad der Vorvernetzung variieren.

Unter Polycarbonate werden hier Polyester verstanden, die theoretisch durch Veresterung der Kohlensäure mit zwei- oder mehrwertigen Alkoholen dargestellt werden können, und an beiden Kettenenden jeweils eine Hydroxylgruppe aufweisen. Vorzugsweise besitzen die Alkohole und letztlich damit auch die Polycarbonatdiole einen aliphatischen Aufbau. Geeignete mehrwertige Alkohole können z.B. dreiwertig sein wie etwa das Glycerin. Bevorzugt werden jedoch zweiwertige Alkohole, insbesondere wenn diese nicht weniger als vier und nicht mehr als zehn C-Atome aufweisen. Cyclische und verzweigtkettige Alkohole sind zwar geeignet, jedoch werden lineare bevorzugt. Die Hydroxylgruppen können benachbart, z.B. in 1,2-Stellung, oder auch isoliert angeordnet sein. Bevorzugt werden Diole mit terminalen OH-Gruppen.

Als Polyether seien z.B. die Polymerisationsprodukte des Ethylenoxids, Propylenoxids Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Als Polyether sind auch die in der genannten EP 354 471 beschriebenen Polytetrahydrofurane als auch Ethylenglykolendständige Polypropylenglykole geeignet.

Als Polyacetale kommen z. B. die aus Glykolen wie Diethylenglykol, Triethylenglykol, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, z.B. Polyterephthalate. Auch Polyester aus Lactonen, z. B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z. B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol. Auch Mischpolymerisate der genannten Polyhydroxylverbindungen können geeignet sein, ebenso wie deren Analoge mit vorzugsweise endständigen Amino- oder Sulfidgruppen.

Die vorstehend genannten Polyole, insbesondere die Polyesterpolyole, besitzen vorzugsweise ein mittleres Molekulargewicht von 300 bis 5000. Als besonders geeignet gilt ein Bereich von 500 bis 3000. Diese Angaben sind zahlengemittelte Molekulargewichtsbereiche, die sich über die OH-Zahl berechnen.

Die mit der Polyolkomponente (I) und der Isocyanatkomponente (III) umgesetzte Komponente (II), auch innerer Emulgator genannt, ist eine Verbindung, die mindestens zwei gegenüber Isocyanaten reaktive Gruppen enthält und darüber hinaus mindestens eine weitere zur Salzbildung befähigte Gruppe. Die zur Salzbildung befähigte Gruppe ist vorzugsweise eine Carbonsäure, eine Sulfonsäure oder eine Ammoniumverbindung. Als solche können eingesetzt werden Dihydroxy- oder auch Diaminoverbindungen, die eine ionisierbare Carbonsäure, Sulfonsäure oder Ammoniumgruppe enthalten. Diese Verbindungen können entweder als solche eingesetzt oder in situ hergestellt werden. Bevorzugt sind Carbonsäurederivate, Sulfonsäurediamine und/oder Aminodiole. Um ionisierbare Carbonsäuregruppen tragende Verbindungen in das Polyurethan einzubringen, kann der Fachmann den Polyolen spezielle Dihydroxycarbonsäuren zugeben, die nicht oder nur im untergeordneten Maß zu Nebenreaktionen der Carboxylgruppen mit den Isocyanatgruppen befähigt sind. Dies sind insbesondere Carbonsäurediole, die eine C-Zahl zwischen 4 und 10 aufweisen. Eine bevorzugte Dihydroxycarbonsäure bzw. Carbonsäurediol ist die Dimethylolpropionsäure (DMPA).

Um zur Salzbildung befähigte Sulfonsäuregruppen einzuführen, kann den Polyolen eine Diaminosulfonsäure zugesetzt werden. Beispiele sind 2,4-Diaminobenzolsulfonsäure aber auch die N-(omega-Amino-alkan)-omega'-aminoalkansulfonsäuren wie sie in der DE 20 35 732 beschrieben sind.

Um zur Salzbildung befähigte Ammoniumgruppen in das Polymere einzufügen, kann auch gemäß der DE 15 95 602 das Polyurethan-Prepolymere mit Hilfe eines aliphatischen und aromatischen Diamins so modifiziert werden, daß an den Kettenenden primäre Aminogruppen vorliegen, die dann mit üblichen Alkylierungsmitteln in quartäre Ammoniumverbindungen oder in Aminsalze überführt werden können.

In den erfindungsgemäß eingesetzten Polyurethanprepolymer-Dispersionen liegen die Polymeren vorzugsweise in Salzform vor. Bei den bevorzugten mit Carbonsäuren oder Sulfonsäuren modifizierten Polymeren liegen als Gegenionen vorzugsweise Alkalimetallsalze, Ammoniak oder Amine, d.h. primäre, sekundäre oder tertiäre Amine vor. Bei den kationisch modifizierten Produkten liegen als Gegenionen Säureanionen, z. B. Chlorid, Sulfat oder die Anionen organischer Carbonsäuren vor. Die zur Salzbildung befähigten Gruppen können daher durch die Gegenionen teil- oder vollständig neutralisiert werden. Auch ein Überschuß an Neutralisationsmittel ist möglich.

Als Verbindungen der Komponente (II), die eine ionisierbare Ammoniumgruppe enthalten, können auch Aminodiole, vorzugsweise Diethanolamin, eingesetzt werden. Die als Komponente (II) genannten geeigneten Verbindungen können selbstverständlich auch in Mischung miteinander eingesetzt werden. Derartige Verbindungen sind auch in der GB 2 104 085 und in der DE 36 43 791 beschrieben.

Es wurde gefunden, daß es für eine makelose Verbundoptik - neben Faktoren wie Schaumfreiheit, gute Folienbenetzung und guten Trokkeneigenschaften während der Verarbeitung an den Kaschiermaschinen - in einer bevorzugten Ausführungsform von Vorteil sein kann, wenn die eingesetzten Polyurethandispersionen so feinteilig sind, daß sie ein optisch opakes System darstellen. Mit zunehmendem Anteil an inneren Emulgatoren wie Carbonsäurediolen, insbesondere DMPA ist die Dispersionsfähigkeit steigerbar. Andererseits sind hier die inneren Emulgatoren auch als Hartsegmentbildner zu betrachten, die mit vermehrtem Gehalt zu einer Verminderung der Anfangsklebrigkeit - im Englischen als "tack" bezeichnet - führen. Eine derartige Abnahme der Anfangshaftung ist bei den vorliegenden Systemen wie eingangs beschrieben nicht wünschenswert. Die Maßnahmen, die zu einer Verbesserung der gewünschten Eigenschaften - also gute Anfangsklebrigkeit bei gleichzeitiger guter optischer Beschaffenheit - führen widersprechen sich hier.

In einer besonderen Ausführungsform konnte dieses Problem erfindungsgemäß dadurch gelöst werden, daß der Gehalt an (II) im Polyurethanprepolymeren 1 bis 13 Gew.-%, insbesondere 2 bis 8 Gew.-%, vorzugsweise 3 Gew.-% bis 6 Gew.-%, bezogen auf den Festkörpergehalt, beträgt. Eine relativ geringe Menge an Dihydroxycarbonsäuren, insbesondere DMPA, hat den Vorteil, daß bei deren Neutralisation z.B. mit Natronlauge entsprechend geringe Mengen an basischen Salzen entstehen, was sich positiv auf die Lagerstabilität derartiger Systeme auswirken kann. Des weiteren kann u.a. durch den vergleichsweise geringen Anteil an (II) eine relativ gute Wasserfestigkeit des gehärteten Klebstoffs erreicht werden. Gute bis sehr gute Eigenschaften des Systems können insbesondere dann sichergestellt werden, wenn neben den genannten relativ geringen Mengen (II) Polyesterpolyole in (I) enthalten sind, die im wesentlichen auf ethersauerstoffhaltigen Glykolen als Alkoholkomponente basieren. Besonders geeignet sind solche Polyesterpolyole, die zumindest überwiegend auf Diethylenglykol als Diolkomponente basieren.

Die den Polyurethan-Dispersionen zugrundeliegende mehrfunktionelle Isocyanatkomponente besteht ganz oder teilweise aus alpha-alpha-alpha'-alpha'-Tetramethylxylylendiisocyanat (TMXDI). Die meta-isomere Form ist besonders geeignet. Nur mit einem Mindestanteil von etwa 20 Gew.-% an TMXDI in der Isocyanatmischung erhält man mit einer auf Polyesterpolyolen basierenden Polyolkomponente eine Polyurethandispersion, die erfindungsgemäß als Folienkaschierklebstoff verwendet werden kann. Bevorzugt besteht die Isocyanatmischung zu mindestens 30 Gew.-%, besser noch zu mindestens 50 Gew.-%, aus TMXDI. Als Faustregel kann gelten, daß die viskositätsbedingte Handhabbarkeit der Produkte bzw. Zwischenprodukte bei der Herstellung der Polyurethanprepolymeren desto besser ist, je höher der Anteil an TMXDI in der Isocyanatmischung ist. Es werden daher Isocyanatkomponenten (III) bevorzugt, die zur Hälfte oder mehr, etwa zu zwei Dritteln oder drei Vierteln, vorzugsweise ausschließlich, TMXDI enthalten. Für TMXDI findet sich gelegentlich auch die Schreibweise Tetramethylxyloldiisocyanat oder Tetramethylxylendiisocyanat.

Als zusätzliche, also als Rest zu 100 Gew.-%, Polyisocyanate sind alle mehrfunktionellen, aromatischen und aliphatischen Isocyanate geeignet, wie z. B. 1,5-Naphthylendiisocyanat, 4,4'-Diphenylmethandiisocyanat (MDI), hydriertes MDI (H₁₂MDI), Trimethylhexadiisocyanat (TMDI), Xylylendiisocyanat (XDI), 4,4'-Diphenyldimethylmethandiisocyanat, Di- und Tetraalkyldiphenyimethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxybutan-1 ,4-diisocyanat, Butan1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure.

Die vorgenannten Isocyanate können sowohl jeweils allein als auch in Mischung als Zusatz zu TMXDI eingesetzt werden. Bevorzugt sindinsbesondere cyclische oder verzweigte - aliphatische Diisocyanate, insbesondere Isophorondiisocyanat (IPDI). In Mischung mit TMXDI geeignet sind insbesondere HDI, IPDI, XDI, TMDI, TDI, MDL und/oder H₁₂-MDI. Weitere geeignete Polyisocyanate sind aus der Patentliteratur bekannt, z.B. aus der DE 37 35 587.

Mit den obengenannten Gehalten an TMXDI können die Polyurethanprepolymeren mit einer gegenüber üblichen Verfahren wie z.B. dem Aceton-Verfahren geringeren Menge an Lösungsmitteln hergestellt werden.

In einer besonderen Ausführungsform wird auf Lösemittel bei der Herstellung gänzlich verzichtet. So kann sichergestellt werden, daß die erfindungsgemäßen Polymerdispersionen lösungsmittelarm, vorzugsweise lösungsmittelfrei, sind.

Vorzugsweise enthalten die geeigneten mehrfunktionellen Isocyanate im Mittel 2 bis höchstens 4 NCO-Gruppen. Die Mengen an der Polyolmischung (I) und an der Mischung mehrfunktioneller Isocyanate (III) werden so gewählt, daß ein bestimmtes Verhältnis von NCO-reaktiven Gruppen zu NCO-Gruppen - NCO/OH-Additionsverhältnis genannt - vorliegt. Bevorzugterweise liegt die Isocyanatkomponente stöchiometrisch im Überschuß vor, übersteigt andererseits aber auch nicht das 2,0-fache an NCO-reaktiven Gruppen. Besonders günstig ist ein Verhältnis gleich oder kleiner 1,7. Der bevorzugte, hinsichtlich der späteren anwendungstechnischen Ergebnisse optimale Bereich liegt auf jeden Fall oberhalb 1.

Erfindungsgemäß wird das aus der Umsetzung der Komponenten (I), (II) und (III) gebildete Prepolymere mit Aminoalkoholen (IV) zur Reaktion gebracht, so daß zumindest anteilsweise die Umsetzung der im Prepolymeren verbliebenen NCO-Gruppen mit (IV) erfolgt. Zu dieser - auch Rückaddition genannten - Umsetzung der NCO-terminierten Prepolymeren eignen sich insbesondere Aminoalkohole mit primärer oder sekundärer Aminogruppe. Auch Verbindungen mit tertiärer Aminogruppe können geeignet sein. Bevorzugt werden niedermolekulare Aminoalkohole. Besonders geeignet sind solche mit einer Kohlenstoffzahl zwischen 2 und 40, vorzugsweise zwischen 2 und 12. Als geeignete Vertreter seien beispielsweise Ethanolamin, Diethanolamin, N-Butylethanolamin, Neopentanolamin und Diglycolamin sowie Aminozucker genannt. Die Isocyanatgruppen können teilweise oder vollständig mit den genannten Aminoalkoholen umgesetzt werden. Ein geeignetes Additionsverhältnis von NCO- zu NHR-Gruppen liegt hier im Bereich von 1 : 1 bis 1 : 0,1, bevorzügt 1 : 0,8 bis 1 : 0,2 und insbesondere 1: 0,7 bis 1: 0,2. R steht für Wasserstoff (bevorzugt) oder Alkyl bzw. Aralkyl. Eine besondere Ausführungsform verwendet als (IV) ausschließlich Monoaminoalkohole. Durch die vorgenannte Umsetzung mit (IV) erhält man zumindest anteilsweise anstatt der NCO-Gruppen im Prepolymeren nunmehr unter Ausbildung von Harnstoffgruppierungen polymergebundene Hydroxylgruppen. Dadurch wird eine anschließende Kettenverlängerung ganz oder teilweise unterbunden, ohne Funktionalität einzubüßen. Nach der Einwirkung von (IV) auf die frisch entstandene Dispersion liegt also ein Reaktionsprodukt vor, welches entsprechend der Zusatzmenge (IV), bezogen auf ein Material mit gleichem NCO-Gehalt im ursprünglichen Prepolymeren, welches jedoch kettenverlängert wurde, wesentlich niedriger molekular geblieben ist und eine deutlicher ausgeprägte Klebrigkeit des getrockneten Rückstandes aufweist. Dies gilt insbesondere wenn Monoaminoalkohole als (IV) eingesetzt wurden. Auf die genannte Art sind vorzugsweise Polyurethanprepolymere herstellbar, die keine reaktiven stickstoffhaltigen Gruppen, insbesondere keine reaktiven Amino- oder Semicarbizid-Gruppen enthalten. Gewünschtenfalls kann sich der Umsetzung mit den Aminoalkoholen eine Kettenverlängerung anschließen.

Zu den Kettenverlängerungsmitteln mit reaktionsfähigen Wasserstoffatomen zählen:
- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bis-hydroxymethyl-cyclohexan, Dioxyethoxyhydrochinon, Terephthalsäure-bis-glykolester, Bernsteinsäuredi-2-hydroxyethylamid, Bernsteinsäure-di-N-methyl-(2-hydroxyethyl)amid, 1,4-Di(2-hydroxy-methyl-mercapto)-2,3,5,6-tetrachlorbenzol, 2-Methylenpropandiol-(1,3), 2-Methyl-propandiol(1,3);
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin;
- Aminoalkohole wie Ethanolamin, Propanolamin, Butanolamin, N-Methyl-ethanolamin, N-Methyl-isopropanolamin;
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren;
- Wasser

Spezielle Kettenverlängerungsmittel mit mindestens einem basischen Stickstoffatom sind z.B. mono-, bis- oder polyoxalkylierte aliphatische, cycloaliphatische, aromatische oder heterocyclische primäre Amine, wie N-Methyldiethanolamin, N-Ethyl-diethanolamin, N-Propyl-diethanolamin, N-Isopropyl-diethanolamin, N-Butyl-diethanolamin, N-Isobutyl-diethanolamin, N-Oleyl-diethanolamin, N-Stearyldiethanolamin, oxethyliertes Kokosfettamin, N-Allyl-diethanolamin, N-Methyl-diisopropanolamin, N-Ethyl-diisopropanolamin, N-Propyldiisopropanolamin, N-Butyl-diisopropanolamin, C-Cyclohexyl-diisopropanolamin, N,N-Dioxethylanilin, N,N-Dioxethyltoluidin, N,N-Dioxethyl-1-aminopyridin, N,N'-Dioxethyl-piperazin, Dimethyl-bisoxethylhydrazin, N,N'-Bis-(2-hydroxy-ethyl)-N,N'-diethyl-hexahydrop-phenylendiamin, N-12-Hydroxyethyl-piperazin, polyalkoxylierte Amine wie oxypropyliertes Methyl-diethanolamin, ferner Verbindungen wie N-Methyl-N,N-bis-3-aminopropylamin, N-(3-Aminopropyl)-N,N'-dimethylethylendiamin, N-(3-Aminopropyl)-N-methyl-ethanolamin, N,N'Bis-(3-aminopropyl)-N,N'-dimethylethylendiamin, N, N'-Bis(3-aminopropyl)-piperazin, N-(2-Aminoethyl)-piperazin, N, N'-Bisoxyethylpropylendiamin, 2,6-Diaminopyridin, Diethanolamino-acetamid, Diethanolamidopropionamid, N,N-Bis-oxyethyl-phenyl-thiosemicarbazid, N,N-Bis-oxethyl-methyl-semicarbazid, p, p'-Bis-aminomethyl-dibenzylmethylamin, 2,6-Diaminopyridin, 2-Dimethylaminomethyl-2-methyl-propandiol-1,3.

Kettenverlängerungsmittel mit zur Quaternierung befähigten Halogenatomen bzw. R-SO₂O-Gruppen sind beispielsweise Glycerin-1-chlorhydrin, Glycerinmonotosylat, Pentaerythrit-bis-benzolsulfonat, Glycerin-monomethansulfonat, Addukte aus Diethanolamin und chlormethylierten aromatischen Isocyanaten oder aliphatischen Halogenisocyanaten wie N,N-Bis-hydroxyethyl-N'-m-chlormethylphenylharnstoff, N-Hydroxyethyl-N'-chlorhexylharnstoff, Glycerin-mono-chlorethylurethan, Bromacetyl-dipropylentriamin, Chloressigsäurediethanolamid. Als Kettenverlängerungsmittel bevorzugt werden kurzkettige gegenüber Isocyanaten reaktive Diamine und/oder Dihydroxy-Verbindungen.

Bei der bevorzugten Kettenverlängerung mit Wasser reagieren die Isocyanatgruppen zunächst mit Wasser und bilden Aminogruppen, die dann ihrerseits mit weiteren Isocyanatgruppen abreagieren. Weitere bevorzugte Kettenverlängerungsmittel sind Polyamine.

Geeignete Herstellverfahren für Polyurethan-Dispersionen sind z.B. in D. Dieterich, Angew. Makromol. Chem. 98, S. 133 (1981)), Ullmann, Encyklopädie der technischen Chemie, 4. Auflage, Band 19, Verlag Chemie, Weinheim/Bergstraße 1974, S. 311-313, Houben-Weyl, Methoden der organischen Chemie, Band E 20/Teil 1-3, S. 1659-1663 und S.1671-1681 sowie in Journal of Waterborne Coating, August 1984, S. 2 ff. beschrieben. Aus den in diesen Artikeln genannten Sekundärliteraturstellen kann sich der geneigte Fachmann auch die entsprechende Patentliteratur erschließen. Geeignete Polyurethandispersionen können, wie aus der bereits genannten EP 354 471 bekannt, nach dem sogenannten Aceton-Verfahren hergestellt werden. Lösemittelzusätze von Niedrigsiedern wie z.B. Aceton sind hier u.a. nötig, um die Viskosität des Prepolymeren zu senken und dieses damit handhabbar zu machen, wodurch die Dispergierung erst möglich wird. Der Nachteil solcher Herstellverfahren ist unter der Berücksichtigung der Forderung nach lösemittelfreien Produkten, das ein technisch aufwendiger Destillationsschritt an das Dispergierverfahren angeschlossen werden muß, um den Niedrigsieder zumindestens überwiegend zu entfernen. Dieses bedeutet einen zusätzlichen Verfahrensschritt, der das Verfahren nicht nur verkompliziert sondern auch zu einer Verteuerung des Produkts führt. Dies nicht zuletzt deshalb, weil das vorzugsweise eingesetzte Aceton nicht wieder ohne weiteres in den Prozeß rückgeführt werden kann, da vorzugsweise wasserfreies Aceton eingesetzt wird. Damit ist für den Fachmann u.a. auch die Frage verknüpft, ob und gegebenenfalls bis zu welcher Menge, ein Restlösemittelgehalt akzeptabel ist, da davon der Verfahrensaufwand abhängt. Dem steht allerdings die Forderung nach einem lösungsmittelfreien Produkt entgegen.

Die Polyurethanprepolymeren der vorliegenden Erfindung können lösungsmittelfrei hergestellt werden. Mit anderen Worten, die Umsetzung der genannten Reaktanten (I) bis (IV) zu den Reaktionsprodukten sowie das Dispergieren der Prepolymerphase kann in Abwesenheit inerter Lösungsmittel durchgeführt werden. Dabei wird üblicherweise so verfahren, daß die vorstehend beschriebenen Reaktanten (I) bis (III) bei Raumtemperatur gemischt werden. Im allgemeinen kann die Reaktion in üblichen Kesselanlagen durchgeführt werden. Die Temperatur bei Reaktionsdurchführung liegt etwa zwischen 90°C und 120°C. Die Reaktionsmischung kann die für Polyurethanreaktionen wirksame Katalysatorzusätze enthalten. Es wird üblicherweise so lange gerührt, bis sich der gewünschte NCO-Wert einstellt. Nach der Dispergierung in Wasser erfolgt die Umsetzung mit Aminoalkoholen (IV), die zumindest anteilsweise mit den NCO-Gruppen der Prepolymeren abreagieren. Die Reaktion kann nach dem sogenannten 1- aber auch nach dem sogenannten 2-Reaktor-Verfahren durchgeführt werden. Im ersten erfindungsgemäß bevorzugten Fall wird unter Einleitung von Wasser mit der zur Neutralisation gewünschten Basenmenge z.B. Natronlauge unter kräftigem Rühren die Polyurethanprepolymeren dispergiert. Andererseits kann aber auch die Prepolymerphase in die wäßrige Basenlösung eingleitet und dort unter kräftigem Rühren dispergiert werden. In beiden Fällen kann die Dispergierung bei erhöhten Temperaturen stattfinden. Die Aminoalkohole (IV) können auch mit dem Wasser bzw. mit dem wäßrigen Neutralisationsmittel vermischt mit den NCO-funktionellen Prepolymeren zusammengebracht werden. Gegebenenfalls schließt sich noch eine ein- bis dreistündige Nachrührphase eventuell mit Kettenverlängerung durch Wasser über verbliebene NCO-Gruppen an. Der Festkörpergehalt der Dispersionen kann über einen weiten Bereich, beispielsweise zwischen 25 bis 50 Gew.-% Festkörpergehalt eingestellt werden. Üblicherweise enthalten die als Reaktionskomponente (A) eingesetzten Polyurethandispersionen einen Festkörpergehalt von etwa 40 Gew-%.

Die vorstehend beschriebenen Polymerdispersionen können zur Bildung eines 2-Komponenten-Reaktivsystems als Reaktivkomponente (B) mehrfunktionelle Verbindungen enthalten, die mit den funktionellen Gruppen der Polyurethanprepolymeren der Reaktivkomponente (A) abreagieren können. Die erfindungsgemäße Harzkomponente (A) kann mit einer relativ breiten Palette von Härtern umgesetzt werden. Beispielsweise seien genannt Isocyanate, Epoxide, Polyethylenimine bzw. Triaceridine und Melamin/Formaldehyd-Systeme. Auch können die gegebenenfalls im Prepolymer enthaltenen Säuregruppen über mehrwertige Ionen, insbesondere mehrwertige Schwermetallionen wie z.B. Zink-oder Zirkonium verbrückt werden. In sofern sind diese mehrwertigen Kationen als mehrfunktionelle Verbindungen zu betrachten. Vorzugsweise enthält die Reaktivkomponente (B) jedoch reaktive mehrfunktionelle organische Verbindungen. Bevorzugt sind mehrfunktionelle Isocyanate. Dies ist insbesondere dann von Vorteil, wenn Beschichtungen oder Verbunde, insbesondere Folienkaschierungen bei relativ niedrigen Temperaturen hergestellt werden sollen. Von den als Härter geeigneten Substanzen sind solche bevorzugt, die sich in der Harzkomponente (A) feinverteilen, bevorzugt stabil einarbeiten lassen. Im Idealfall können diese Substanzen ebenfalls eine stabile wäßrige Dispersion bilden.

Die reaktiven OH-Endgruppen der Polyurethanprepolymeren sind insbesondere einer Härtung durch Zusatz von Polyisocyanat-Verbindungen zugänglich. Vorzugsweise enthalten die in wäßriger Dispersion der Reaktionskomponente (A) eingesetzten Prepolymeren einen Gehalt an gegen Isocyanaten reaktiven Gruppen - berechnet als OH-Funktionen - von etwa 0,2 bis 1,0 Gew.-%. Besonders geeignet ist ein Bereich von 0,4 bis 0,6 Gew.-%.

Die Reaktivkomponente (B), auch Härter genannt, besteht vorzugsweise zumindest überwiegend aus in Wasser dispergierbaren Polyisocyanaten (V). Derartige Isocyanate sind dem Fachmann bereits bekannt, z.B. aus D. Dieterich, Chemie in unserer Zeit 24,(1990), 135 bis 141. Als besonders geeignete Substanzen seien hier insbesondere wasserdispergierbare aliphatische HDI-Triisocyanurate genannt. Desweiteren kann Triglycidylisocyanurat bevorzugt sein. Geeignet sind auch solche Verbindungen, bei denen festes kristallines Diisocyanat in eine dünne Diffusionssperrschicht eingehüllt ist, die bei Raumtemperatur jede weitere Polyaddition unterbindet. Ein für dieses Verfahren besonders geeignetes Diisocyanat ist das N,N'-bis(2-isocyanatotoluyl)Harnstoff (TDIH), das nach einem Verfahren aus einer Emulsion von Toluylendiisocyanat (TDI) in Wasser hergestellt werden kann. Durch eine besondere Reaktionsführung wird dabei erreicht, daß die endständigen Isocyanatgruppen im inneren der Teilchen intakt bleiben. Erst wenn die Diffusionssperrschicht thermisch oder mechanisch zerstört wird, können diese Isocyanatgruppen abreagieren, z.B. mit der Reaktivkomponente (A). Im Sinne der Erfindung wird bevorzugt, daß (V) zumindest überwiegend aus HDI-Polyisocyanuraten und/oder HDI-Biuret-Isocyanaten besteht. Das Verhältnis von (A) zu (B) kann über einen weiten Bereich variiert werden. Üblicherweise liegt jedoch (B) im stöchiometrischen Überschuß vor. Ein besonders günstiges filmbildendes Additionsverhältnis erhält man bei einem 1,2- bis 2,5-fachen stöchiometrischen Überschuß an (B).

Ein weiterer Gegenstand der Erfindung ist ein Verfahren zur Herstellung der erfindungsgemäßen Polymerdispersionen enthaltend die Komponenten (A) und (B). Dieses Verfahren zur Herstellung derartiger 2-Komponenten-Reaktivsysteme kennzeichnet sich dadurch, daß die als Härter geeigneten reaktiven mehrfunktionellen Verbindungen in der Harzkomponente (A) feinverteilt, vorzugsweise stabil, dispergiert werden. In einer besonderen Ausführungsform des Verfahrens werden die als Härter geeigneten mehrfunktionellen reaktiven Verbindungen zunächst in einem wäßrigen Medium dispergiert und diese Dispersion anschließend mit der Harzkomponente (A) innig vermengt. Bevorzugt werden bei den vorstehend beschriebenen Verfahren mehrfunktionelle Isocyanate eingesetzt, insbesondere solche, die in Wasser stabil dispergierbar sind.

Da auch die Reaktivkomponente (B) vorzugsweise ohne Lösungsmittel in wäßrigem Medium dispergiert werden kann, ist es möglich ein gänzlich lösungsmittelfreies 2-Komponenten-Reaktivsystem zur Verfügung zu stellen. Die erfindungsgemäßen Dispersionen können außer den bereits genannten Bestandteilen übliche, dem Fachmann für Polymerdispersionen bekannte Additive wie Katalysatoren, Netzmittel, Entschäumer, Verlaufshilfsmittel, Füllstoffe, Pigmente, Farbstoffe, Verdickungsmittel und dergleichen enthalten.

Ein weiterer Gegenstand der Erfindung ist die Verwendung der als Harzkomponente geeigneten Polymerdispersion bzw. der 2-Komponenten-Reaktivsysteme.

Die erfindungsgemäßen 2-Komponenten-Reaktivsysteme sind in hervorragender Weise zum flächigen Verbinden von Substraten geeignet. Als Substrate kommen beispielsweise textile Gewebe, Vliese, Papier, Karton, Kunststoffe und auch Metalle in Frage. Es können dabei die Reaktivkomponenten (A) und (B) zuerst miteinander vermengt und dann auf mindestens eins der Substrate aufgebracht werden. Es kann sich jedoch auch als vorteilhaft erweisen, daß die beiden Reaktivkomponenten nacheinander auf mindestens eins der Substrate aufgebracht werden. In besonderen Fällen kann es von Vorteil sein, daß die Reaktivkomponente (A) auf ein Substrat und die Reaktivkomponente (B) auf ein anderes Substrat aufgebracht werden, welche dann anschließend zusammengefügt werden. Das Auftragen der Reaktivkomponenten kann durch Sprühen, Streichen, Spritzen, Rakeln und/oder Walzenauftrag erfolgen. Besonders geeignet sind die erfindungsgemäßen Reaktivklebstoffe zum Verbinden von Substraten, die die Form von Folien, insbesondere Kunststoff- und/oder Metallfolien besitzen. Insbesondere ist damit das Kaschieren von Folien also die Herstellung von Verbundfolien gemeint. Die erfindungsgemäßen Reaktivklebstoffe können in ähnlicher oder gleicher Weise wie bisher bekannte 2-Komponenten-Folienkaschierklebstoffe verwendet werden. Sie sind kaschiermaschinengeeignet. Die Aushärtung und Trocknung der Klebstoffe erfolgt üblicherweise bei Umgebungstemperatur, im allgemeinen also bei Temperaturen zwischen 20°C und 40°C. Es kann jedoch auch durchaus bei höheren Temperaturen ausgehärtet und getrocknet werden. Die so entstehenden Produkte d.h. die kaschierten Folien bzw. Verbunde enthalten also das erfindungsgemäße 2-Komponenten-Reaktivsystem und damit auch die Harzkomponente (A) in abreagiertem d.h. ausgehärtetem Zustand. Diese Verbundfolien zeichnen sich durch eine gute bis excellente Verbundoptik, gute Wasserfestigkeit sowie gute bis hervorragende Verbundhaftwerte aus.

Des weiteren sind die erfindungsgemäßen 2-Komponenten-Reaktivsysteme zum Beschichten von Substraten, insbesondere der bereits oben angeführten Substrate, geeignet. Weitere Anwendungsmöglichkeit dieser Systeme ist z.B. die Verwendung als Adhäsivklebstoffe oder als Lackbindemittel.

Die vorstehende Erfindung wird durch nachstehende Beispiele näher erläutert.

### Beispiele

### Beispiel 1:

255,1 g eines linearen Polyesters bestehend aus den Komponenten Adipinsäure und Diethylenglykol mit der OH-Zahl 57 mg KOH/g, 14,2 Dimethylolpropionsäure und 69 g m-Tetramethylxylylendiisocyanat wurden bei 110°C 1 1/2 h zur Reaktion gebracht. Der NCO-Gehalt fiel in dieser Zeit auf 1,28 %. In die ca. 100°C heiße Masse wurde sodann unter schnellem Rühren eine Mischung von 4,24 g NaOH in 650 g Wasser eingetragen. Nach ca. 10 Min. hatte sich eine opake Dispersion gebildet. Bei einer Mischtemperatur von 52°C wurden sodann 7,44 g Diglykolamin zugegeben und über den verbliebenen NCO-Gehalt bei 80°C 2 h unter Rühren kettenverlängert.

### Produktdaten der Polymerdispersion (Harzkomponente):

- Festkörpergehalt :: 35 Gew. -%
- pH-Wert: 7,35
- Viskosität :: 23 sec, DIN Becher 4 mm, 20°C
- Aussehen :: opak bis klar
- Film auf Teflonunterlage :: klar, klebrig

### härtung:

- Härter :: Dispergierbares, polyfunktionelles, aliphatisches Isocyanat mit 18,5 Gew.-% NCO (HDI-Biuret-Triisocyanat)
- Mischungsverhältnis :: Harzkomponente : Härter = 100 : 6 Gewichtsteile
- Film auf Teflonunterlage :: klebfrei, vernetzt nach 1 Tag

### Beispiel 2:

236 g eines linearen Polyesters bestehend aus den Komponenten Adipinsäure, Diethylenglykol, Neopentylglykol und Hexandiol 1,6 mit der OH-Zahl 58 mg KOH/g, 16,35 g Dimethylolpropionsäure und 77,39 g m-Tetramethylxylylendiisocyanat wurden wie in Beispiel 1 bei 110°C 1 1/2 Stunden zur Reaktion gebracht.

Bei einem NCO-Gehalt von 1,91 % wurden in die ca. 100°C heiße Masse 4,88 g NaOH, gelöst in 650 g destilliertem Wasser, unter schnellem Rühren eingetragen, wodurch eine opak bis leicht milchige Dispersion entstand. Nach 10 Min. Rühren wurden in die auf 55°C abgekühlte Dispersion 15,37 g Diethanolamin eingerührt und eine weitere Stunde bei 70°C nachgerührt.

### Produktdaten der Polymerdispersion (Harzkomponente):

- Festkörpergehalt :: 35 Gew.-%
- pH-Wert :: 7,4
- Viskosität :: 21 sec, DIN Becher 4 mm, 20°C
- Aussehen :: opak, leicht milchig
- Film auf Teflonunterlage :: klar, klebrig

### Härtung:

- Härter :: Dispergierbares, polyfunktionelles, aliphatisches Isocyanat mit 18,5 Gew.-% NCO (HDI-Biuret-Triisocyanat)
- Mischungsverhältnis :: Harzkomponente : Härter = 100 : 7,5 Gewichtsteile
- Film auf Teflonunterlage :: klarer, klebfreier, vernetzter Film nach 1 Tag

### Beispiel 3:

250 g eines Polyesters aus Adipinsäure, Isophthalsäure und Diethylenglykol mit der OH-Zahl 57,5 mg KOH/g, 125 g eines Polyesters bestehend aus Adipinsäure und Diethylenglykol mit einer OH-Zahl von 61 mg KOH/g, 22,4 g Dimethylolpropionsäure und 110,75 g m-Tetramethylxylylendiisocyanat wurden wie in Beispiel 1 bei 96°C 3 h unter Rühren zur Reaktion gebracht. Bei einem NCO-Gehalt von 1,49 % wurden 6,9 g NaOH, gelöst in 720 g destilliertem Wasser, unter schnellem Rühren eingebracht. Nach ca. 10 Min. Rühren wurden 5,5 g Ethanolamin zugegeben und vorhandenes Rest NCO 2 h bei 70°C mittels Wasser kettenverlängert.

### Produktdaten der Polymerdispersion (Harzkomponente):

- Festkörpergehalt :: 42,0 Gew.-%
- pH-Wert :: 7,45
- Viskosität :: 535 mPas nach Brookfield LVT Sp.2, 30 Upm, 20°C
- Aussehen :: opak bis klar
- Film auf Teflonunterlage :: klar, klebrig bis blockend

### Härtung:

- Härter :: Polyfunktionelles, aliphatisches vordispergiertes Isocyanat mit 18,5 Gew.-% NCO, 6,5 Gew.-Teile in 9 Gew.-Teilen Wasser (HDI-Triisocyanurat)
- Mischungsverhältnis :: Harzkomponente : Härter = 100 : 15,5 Gewichtsteile
- Film auf Teflonunterlage :: klebfrei, vernetzt, klar

## Patentansprüche

1. Als reaktive Harzkomponente (A) für ein 2-Komponenten-Reaktivsystem geeignete wäßrige Polymerdispersion, dadurch gekennzeichnet, daß zumindestens 20 Gew.-% des Polymergehaltes aus einer wäßrigen Dispersion OH-funktioneller Polyurethanprepolymerer stammt, die herstellbar ist durch Umsetzung
- einer Polyesterpolyole enthaltenden Polyolkomponente (I) und
- gegenüber Isocyanaten mindestens zweifach reaktive Verbindungen mit zur Salzbildung befähigten Gruppen (II) mit
- einer zumindest aus 20 Gew.-% Tetramethylxylylendiisocyanat (TMXDI) bestehenden Isocyanatkomponente (III) im stöchiometrischen Überschuß,
- anschließendes Dispergieren in Wasser und
- zumindest anteilsweise Umsetzung der verbliebenen NCO-Gruppen mit Amino-alkoholen (IV) sowie
- gewünschtenfalls anschließender Kettenverlängerung.

2. Polymerdispersion nach Anspruch 1, dadurch gekennzeichnet, daß die in der Polyolkomponente (I) enthaltenen Polyesterpolyole auf Adipinsäure und/oder Phthalsäure als Säurekomponente basieren.

3. Polymerdispersion nach mindestens einem der vorstehenden Ansprüche, dadurch gekennzeichnet, daß die Polyesterpolyole zumindest teilweise auf ethersauerstoffhaltigen Glykolhomologen als Alkoholkomponente basieren.

4. Polymerdispersion nach mindestens einem der vorstehenden Ansprüche, dadurch gekennzeichnet, daß die zur Herstellung der Polyurethanprepolymeren eingesetzten Polyesterpolyole ein zahlengemitteltes Molekulargewicht von 300 bis 5000, insbesondere von 500 bis 3000, aufweisen.

5. Polymerdispersion nach mindestens einem der vorstehenden Ansprüche, dadurch gekennzeichnet, daß (II) aus Carbonsäurediolen, Sulfonsäurediamine und/oder Aminodiolen besteht.

6. Polymerdispersion nach mindestens einem der vorstehenden Ansprüche, dadurch gekennzeichnet, daß (II) zumindest überwiegend aus Dimethylolpropionsäure (DMPA) besteht.

7. Polymerdispersion nach mindestens einem der vorstehenden Ansprüche, dadurch gekennzeichnet, daß neben TMXDI in der Isocyanatkomponente (III) HDI, IPDI, XDI, TMDI, TDI, MDI und/oder H₁₂MDI enthalten sind.

8. Polymerdispersion nach mindestens einem der vorstehenden Ansprüche, dadurch gekennzeichnet, daß die Isocyanatkomponente (III) mindestens 30 Gew.-%, vorzugsweise mindestens 50 Gew.-%, TMXDI enthält.

9. Polymerdispersion nach mindestens einem der vorstehenden Ansprüche, dadurch gekennzeichnet, daß sie lösungsmittelarm, vorzugsweise lösungsmittelfrei ist.

10. Polymerdispersion nach mindestens einem der vorstehenden Ansprüche, dadurch gekennzeichnet, daß bei der Umsetzung von (I) und (II) mit (III) das NCO/OH-Additionsverhältnis gleich oder kleiner 2,0, insbesondere 1,7, jedoch größer 1 ist.

11. Polymerdispersion nach mindestens einem der vorstehenden Ansprüche, dadurch gekennzeichnet, daß die Aminoalkohole (IV) niedermolekular sind, insbesondere eine Kohlenstoffzahl zwischen 2 und 40, vorzugsweise zwischen 2 und 12, aufweisen.

12. Polymerdispersion nach mindestens einem der vorstehenden Ansprüche, dadurch gekennzeichnet, daß (IV) aus Monoaminoalkoholen besteht.

13. Polymerdispersion nach mindestens einem der vorstehenden Ansprüche, dadurch gekennzeichnet, daß der Gehalt an (II) in den Polyurethanprepolymeren 1 bis 13 Gew.-%, vorzugsweise 2 bis 8 Gew.-%, insbesondere 3 bis 6 Gew.-%, bezogen auf Festkörpergehalt ist.

14. Polymerdispersion nach mindestens einem der vorstehenden Ansprüche, dadurch gekennzeichnet, daß bei der Umsetzung der NCO-Gruppen mit den Aminoalkoholen (IV) das NCO/NHR-Additionsverhältnis im Bereich von 1 : 1 bis 1 : 0,1, vorzugsweise im Bereich von 1 : 0,8 bis 1 : 0,2 und insbesondere im Bereich von 1 : 0,7 bis 1 : 0,2 liegt.

15. Polymerdispersion nach mindestens einem der vorstehenden Ansprüche, dadurch gekennzeichnet, daß eine Kettenverlängerung durch Wasser und/oder mittels Polyaminen erfolgt.

16. Polymerdispersion nach mindestens einem der vorstehenden Ansprüche, dadurch gekennzeichnet, daB zur Bildung eines 2-Komponenten-Reaktivsystems als Reaktivkomponente (B) mehrfunktionelle Verbindungen enthalten sind, die mit den funktionellen Gruppen der Polyurethanprepolymeren der Reaktivkomponente (A) abreagieren können.

17. Polymerdispersion nach mindestens einem der vorstehenden Ansprüche, dadurch gekennzeichnet, daß (B) reaktive mehrfunktionelle organische Verbindungen, vorzugsweise mehrfunktionelle Isocyanate enthält.

18. Polymerdispersion nach mindestens einem der vorstehenden Ansprüche, dadurch gekennzeichnet, daß die Isocyanate zumindest überwiegend aus HDI-Polyisocyanuraten und/oder HDI-Biuret-Isocyanaten bestehen.

19. Polymerdispersion nach mindestens einem der vorstehenden Ansprüche, dadurch gekennzeichnet, daß (B) im Verhältnis zu (A) im etwa 1,2- bis 2,5-fachen stöchiometrischen Überschuß vorliegt.

20. Verfahren zur Herstellung einer Polymerdispersion gemäß einem der Ansprüche 16 bis 19, dadurch gekennzeichnet, daß die Reaktivkomponente (B) in einer Harzkomponente (A), die einem der Ansprüche 1 bis 15 entspricht, feinverteilt - vorzugsweise stabil - dispergiert wird.

21. Verfahren nach vorstehendem Anspruch, dadurch gekennzeichnet, daß zunächst die Reaktivkomponente (B) dadurch hergestellt wird, daß in Wasser dispergierbare mehrfunktionelle organische Verbindungen insbesondere Isocyanate in wäßrigem Medium dispergiert werden und anschließend diese Dispersion mit der Harzkomponente (A) innig vermengt wird.

22. Verwendung der Dispersionen nach Ansprüchen 1 bis 19 zum flächigen Verbinden von Substraten.

23. Verwendung der Dispersionen nach Ansprüchen 1 bis 19 zum Verbinden von Substraten in Form von Kunststoff- und oder Metallfolien.

24. Verwendung der Dispersionen nach Ansprüchen 1 bis 19 zum Beschichten von Substraten.

## Claims

1. An aqueous polymer dispersion suitable as reactive resin component (A) for a two-component reactive system, characterized in that at least 20% by weight of the polymer content emanates from an aqueous dispersion of OH-functional polyurethane prepolymers obtainable by reaction of
- a polyol component (I) containing polyester polyols and
- compounds containing at least two isocyanate-reactive groups and, in addition, groups capable of salt formation (II) with
- a stoichiometric excess of an isocyanate component (III) consisting of at least 20% by weight tetramethyl xylylene diisocyanate (TMXDI),
- subsequent dispersion in water and
- at least partial reaction of the remaining NCO groups with aminoalcohols (IV) and
- if desired, subsequent chain extension.

2. A polymer dispersion as claimed in claim 1, characterized in that the polyester polyols present in polyol component (I) are based on adipic acid and/or phthalic acid as the acid component.

3. A polymer dispersion as claimed in at least one of the preceding claims, characterized in that the polyester polyols are based at least partly on glycol homologs containing ether oxygen as the alcohol component.

4. A polymer dispersion as claimed in at least one of the preceding claims, characterized in that the polyester polyols used for the preparation of the polyurethane prepolymers have a number average molecular weight of 300 to 5,000 and, more particularly, 500 to 3,000.

5. A polymer dispersion as claimed in at least one of the preceding claims, characterized in that (II) consists of carboxylic acid diols, sulfonic acid diamines and/or aminodiols.

6. A polymer dispersion as claimed in at least one of the preceding claims, characterized in that (II) consists at least predominantly of dimethylol propionic acid (DMPA).

7. A polymer dispersion as claimed in at least one of the preceding claims, characterized in that, in addition to TMXDI, the isocyanate component (III) contains HDI, IPDI, XDI, TMDI, TDI, MDI and/or H₁₂MDI.

8. A polymer dispersion as claimed in at least one of the preceding claims, characterized in that the isocyanate component (III) contains at least 30% by weight and preferably at least 50% by weight TMXDI.

9. A polymer dispersion as claimed in at least one of the preceding claims, characterized in that it is substantially free and preferably completely free from solvent.

10. A polymer dispersion as claimed in at least one of the preceding claims, characterized in that, in the reaction of (I) and (II) with (III), the NCO:OH addition ratio is, or less than, 2.0 and, more particularly 1.7, but more than 1.

11. A polymer dispersion as claimed in at least one of the preceding claims, characterized in that the aminoalcohols (IV) have low molecular weights and, in particular, contain from 2 to 40 and preferably from 2 to 12 carbon atoms.

12. A polymer dispersion as claimed in at least one of the preceding claims, characterized in that (IV) consists of monoaminoalcohols.

13. A polymer dispersion as claimed in at least one of the preceding claims, characterized in that the content of (II) in the polyurethane prepolymers is from 1 to 13% by weight, preferably from 2 to 8% by weight and, more preferably, from 3 to 6% by weight, based on solids.

14. A polymer dispersion as claimed in at least one of the preceding claims, characterized in that, in the reaction of the NCO groups with the aminoalcohols (IV), the NCO:NHR addition ratio is in the range from 1:1 to 1:0.1 and preferably in the range from 1:0.7 to 1:0.2.

15. A polymer dispersion as claimed in at least one of the preceding claims, characterized in that the chain extension is carried out with water and/or polyamines.

16. A polymer dispersion as claimed in at least one of the preceding claims, characterized in that, to form a two-component reactive system, polyfunctional compounds capable of reacting off with the functional groups of the polyurethane prepolymers of reactive component (A) are present as reactive component (B).

17. A polymer dispersion as claimed in at least one of the preceding claims, characterized in that (B) contains reactive polyfunctional organic compounds, preferably polyfunctional isocyanates.

18. A polymer dispersion as claimed in at least one of the preceding claims, characterized in that the isocyanates consist at least predominantly of HDI polyisocyanurates and HDI biuret isocyanates.

19. A polymer dispersion as claimed in at least one of the preceding claims, characterized in that (B) is present in a stoichiometric excess of about 1.2 to 2.5-fold over (A).

20. A process for the production of the polymer dispersion claimed in any of claims 16 to 19, characterized in that reactive component (B) is dispersed in finely divided and preferably stable form in a resin component (A) corresponding to any of claims 1 to 15.

21. A process as claimed in the preceding claim, characterized in that reactive component (B) is first prepared by dispersing polyfunctional organic compounds dispersible in water, more particularly isocyanates, in an aqueous medium and then thoroughly mixing the resulting dispersion with the resin component (A).

22. The use of the dispersions claimed in claims 1 to 19 for the surface bonding of substrates.

23. The use of the dispersions claimed in claims 1 to 19 for the bonding of substrates in the form of plastic films or metal foils.

24. The use of the dispersions claimed in claims 1 to 19 for bonding substrates.

## Revendications

1. Dispersion de polymères aqueuse indiquée comme composant résineux réactif (A) pour un système réactif à 2 composants, caractérisé en ce que au moins 20% en poids de la teneur en polymères provient d'une dispersion aqueuse de prépolymères de polyuréthannes fonctionnels en OH, qui peut être produite par réaction :
- d'un composant polyol (I) contenant des polyesterpolyols ;et
- de composés au moins deux fois réactifs vis-à-vis des isocyanates ayant des groupes (II) aptes à la formation de sels avec :
- un composant isocyanate (III) se composant au moins de 20% en poids d'un tétraméthylxylylénediisocyanate (TMXDI) en excès stoechiométrique ;
- une dispersion consécutive dans l'eau ;et
- une réaction au moins partielle des groupes NCO résiduels avec des amino-alcools (IV) ainsi que
- éventuellement un prolongement de chaîne consécutif.

2. Dispersion de polymères selon la revendication 1, caractérisée en ce que les polyesterpolyols contenus dans le composant polyol (I) sont basés sur l'acide adipique et/ou l'acide phtalique comme composant acide.

3. Dispersion de polymères selon au moins une des revendications précédentes, caractérisée en ce que les polyesterpolyols sont basés au moins partiellement sur des homologues du glycol contenant de l'oxygène et de l'éther comme composant alcool.

4. Dispersion de polymères selon au moins une des revendications précédentes, caractérisée en ce que les polyesterpolyols mis en jeu pour la production des prépolymères de polyuréthanne comportent un poids moléculaire moyenne numériquement allant de 300 à 5000, en particulier de 500 à 3000.

5. Dispersion de polymères selon au moins une des revendications précédentes, caractérisée en ce que (II) est composé de diols d'acide carboxyliques, de diamines d'acide sulfonique et/ou d'aminodiols.

6. Dispersion de polymères selon au moins une des revendications précédentes, caractérisée en ce que (II) est composé au moins principalement d'acide diméthylolpropionique (DPMA).

7. Dispersion de polymères selon au moins une des revendications précédentes, caractérisée en ce que'.outre TMXDI sont contenus dans le composant isocyanate (III) HDI, IPDI, XDI, TMDI, TDI, MDI et/ou H₁₂MDI.

8. Dispersion de polymères selon au moins une des revendications précédentes, caractérisée en ce que le composant isocyanate (III) contient au moins 30% en poids, de préférence au moins 50% en poids, de TMXDI.

9. Dispersion de polymères selon au moins une des revendications précédentes, caractérisée en ce qu'elle est pourvue en solvant, de préférence exempte de solvant.

10. Dispersion de polymères selon au moins une des revendications précédentes, caractérisée en ce que dans la réaction de (I) et (II) avec (III) le rapport d'addition NCO/OH est égal ou inférieur à 2,0, en particulier 1,7, mais supérieur à 1.

11. Dispersion de polymères selon au moins une des revendications précédentes, caractérisée en ce que les amino-alcools (IV) sont de poids moléculaire faible, elles ont en particulier un nombre de carbones entre 2 et 40, de préférence entre 2 et 12.

12. Dispersion de polymères selon au moins une des revendications précédentes, caractérisée en ce que (IV) se compose de monoamino-alcools.

13. Dispersion de polymères selon au moins une des revendications précédentes, caractérisée en ce que la teneur en (II) dans les prépolymères d'uréthanne est de 1 à 13% en poids, de préférence de 2 à 8% en poids, en particulier de 3 à 6% en poids, par rapport à la teneur en substances solides.

14. Dispersion de polymères selon au moins une des revendications précédentes, caractérisée en ce que dans la réaction des groupes NCO avec les amino-alcools (IV) le rapport d'addition NCO/NHR se situe dans la zone de 1:1 à 1:0,1, de préférence dans la zone de 1:0,8 à 1:0,2 et en particulier dans la zone de 1:0,7 à 1:0,2.

15. Dispersion de polymères selon au moins une des revendications précédentes, caractérisée en ce qu'un allongement de chaîne a lieu par de l'eau et/ou au moyen de polyamines.

16. Dispersion de polymères selon au moins une des revendications précédentes, caractérisée en ce que pour la formation d'un système réactif à 2 composants sont contenus comme composant réactif (B) des composés plurifonctionnels, qui peuvent réagir avec les groupes fonctionnels des prépolymères de polyuréthanne du composant réactif (A).

17. Dispersion de polymères selon au moins une des revendications précédentes, caractérisée en ce que (B) contient des composés organiques réactifs plurifonctionnels, de préférence des isocyanates plurifonctionnels.

18. Dispersion de polymères selon au moins une des revendications précédentes, caractérisée en ce que les isocyanates sont composés au moins principalement de polyisocyanates HDI et/ou d'isocyanates HDI de Biuret.

19. Dispersion de polymères selon au moins une des revendications précédentes, caractérisée en ce que (B) est présent dans le rapport par rapport à (A) en excès d'environ 1,2 à 2,5 fois stoechiométrique.

20. Procédé de préparation d'une dispersion de polymères selon une des revendications 16 ) 19, caractérisé en ce que le composant réactif (B) est dispersé dans un composant résineux (A), qui correspond à une des revendications 1 à 15, finement réparti de préférence stable.

21. Procédé selon la revendication précédente, caractérisé en ce qu'on prépare d'abord le composant réactif (B), en ce que les composés organiques plurifonctionnels dispersibles dans l'eau en particulier des isocyanates sont mis en dispersion dans un milieu aqueux et qu'ensuite cette dispersion est mélangée de manière intime avec le composant résineux (A).

22. Utilisation des dispersions selon les revendications 1 à 19 pour la liaison plane de substrats.

23. Utilisation des dispersions selon les revendications 1 à 19, pour la liaison de substrats sous forme de feuilles de matière plastique et/ou de métal.

24. Utilisation des dispersions selon les revendications 1 à 19 pour l'enduction de substrats.
